(19) Europäisches Patentamt
European Patent Office
Office européen des brevets

(11) **EP 4 034 443 B1**

(12) **EUROPÄISCHE PATENTSCHRIFT**

(45) Veröffentlichungstag und Bekanntmachung des Hinweises auf die Patenterteilung:
**02.10.2024 Patentblatt 2024/40**

(21) Anmeldenummer: **20739900.7**

(22) Anmeldetag: **02.07.2020**

(51) Internationale Patentklassifikation (IPC):
*B60W 40/12* (2012.01)    *B60T 8/172* (2006.01)
*B60C 11/24* (2006.01)

(52) Gemeinsame Patentklassifikation (CPC):
**B60W 40/12; B60C 23/061; B60T 8/172;**
B60T 2210/36; B60T 2240/07; B60W 2520/10;
B60W 2520/28; B60W 2556/50; B60W 2720/28

(86) Internationale Anmeldenummer:
**PCT/EP2020/068601**

(87) Internationale Veröffentlichungsnummer:
**WO 2021/058155 (01.04.2021 Gazette 2021/13)**

(54) **VERFAHREN ZUM ERMITTELN EINES UMFANGS EINES FAHRZEUGRADS SOWIE KRAFTFAHRZEUG**

METHOD FOR DETERMINING A CIRCUMFERENCE OF A VEHICLE WHEEL, AND MOTOR VEHICLE

PROCÉDÉ DE DÉTERMINATION D'UNE CIRCONFÉRENCE DE ROUE DE VÉHICULE ET VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2019 DE 102019125655**

(43) Veröffentlichungstag der Anmeldung:
**03.08.2022 Patentblatt 2022/31**

(73) Patentinhaber: **Audi AG**
**85045 Ingolstadt (DE)**

(72) Erfinder: **BELOV, Anton**
**85051 Ingolstadt (DE)**

(56) Entgegenhaltungen:
**DE-A1- 102006 058 567**

• **SCHEIDE TOBIAS ET AL: "A Map Aided Localization System for Safety-relevant Automotive Assistance Systems", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12 September 2014 (2014-09-12), pages 1847 - 1854, XP056007880**
• **OLSON E: "A passive solution to the sensor synchronization problem", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 1059 - 1064, XP031920438, ISBN: 978-1-4244-6674-0, DOI: 10.1109/IROS.2010.5650579**

**Beschreibung**

Die Erfindung betrifft ein Verfahren zum Ermitteln wenigstens eines einen Umfang eines Rads eines Fahrzeugs charakterisierenden Umfangswerts gemäß dem Oberbegriff von Patentanspruch 1. Des Weiteren betrifft die Erfindung ein Kraftfahrzeug.

Die DE 10 2006 058 567 A1 offenbart ein Verfahren zur Ermittlung eines aktualisierten Radumfangs zumindest eines an einem Fahrzeug angeordneten Rads. Bei dem Verfahren ist dem Rad in einer Steuereinheit zumindest ein Radumfang zugeordnet. Abhängig von der Rotationsgeschwindigkeit des Rads und abhängig von dem zugeordneten Radumfang wird bei dem Verfahren mittels der Steuereinheit die Radgeschwindigkeit ermittelt. Des Weiteren ist es vorgesehen, dass eine von der ermittelten Radgeschwindigkeit unabhängige Referenzgeschwindigkeit des Fahrzeugs und/oder des Rads ermittelt wird. Außerdem wird die Abweichung der zumindest einen Radgeschwindigkeit von der Referenzgeschwindigkeit bestimmt. Abhängig von der Abweichung wird der aktualisierte Radumfang des Rads ermittelt.

Des Weiteren ist der DE 10 2012 000 213 A1 ein Verfahren zur Ermittlung des aktuellen Radumfangs von zumindest einem Rad eines Kraftfahrzeugs als bekannt zu entnehmen.

Aus Scheide T., Hecker P., "A map aided localization system for safety-relevant automotive assistance systems", 2014 ist ein Verfahren zum Verbessern der Positionsbestimmung aus Daten eines Navigationssystems bekannt, welche eine Schätzung einer Position eines Kraftfahrzeugs auf einer Landkarte mittels eines Kalman-Filter-Systems verbessert. Die genauere Position kann von weiteren Assistenzsystemen im Kraftfahrzeug genutzt werden.

Aus Olson E., "A passive solution to the sensor synchronization problem", 2010 ist ein Verfahren zur Synchronisierung von Sensordaten bekannt, bei welchem ein zurückliegender Zeitpunkt eines von einem Sensor gemessenen Ereignisses ausgehend von einer späteren Registrierung des Ereignisses durch den Sensor geschätzt werden kann.

Aufgabe der vorliegenden Erfindung ist es, ein Verfahren und ein Kraftfahrzeug zu schaffen, sodass ein Umfang eines Rads besonders präzise ermittelt werden kann.

Diese Aufgabe wird erfindungsgemäß durch ein Verfahren mit den Merkmalen des Patentanspruchs 1 sowie durch ein Kraftfahrzeug mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Ermitteln wenigstens eines einen Umfang eines Rads eines Fahrzeugs charakterisierenden Umfangswerts. Insbesondere wird im Rahmen des Verfahrens der Umfang selbst ermittelt. Der Umfang beziehungsweise der Umfangswert wird im Rahmen des Verfahrens beispielsweise geschätzt. Insbesondere wird das Verfahren bei einer Fahrt des Fahrzeugs durchgeführt. Bei beziehungsweise während der Fahrt des Fahrzeugs ist das Fahrzeug in Fahrzeughochrichtung nach unten hin beispielsweise an einem Boden über das auch als Fahrzeugrad bezeichnete Rad abgestützt, wobei das Rad während der Fahrt den Boden direkt beziehungsweise unmittelbar berührt und an dem Boden abrollt. Im Rahmen der Fahrt wird das Fahrzeug entlang des Bodens gefahren.

Bei dem Verfahren wird, insbesondere mittels eines Sensors des Fahrzeugs, eine Drehzahl des Rads erfasst. Dabei ist die Drehzahl vorzugsweise größer als 1. Insbesondere wird die Drehzahl des Rads während einer insbesondere vorgebbaren oder vorgegebenen Zeitspanne erfasst, wobei es vorzugsweise vorgesehen ist, dass die Drehzahl während der Zeitspanne variiert. Vorzugsweise ist die Drehzahl zumindest während eines Teils der Zeitspanne größer als 0. Als besonders vorteilhaft hat es sich gezeigt, wenn die Drehzahl während der gesamten Zeitspanne größer als 0 ist. Als der Sensor wird beispielsweise ein Drehzahlsensor verwendet, welcher auch als Raddrehzahlsensor bezeichnet wird. Das Rad umfasst beispielsweise eine Felge und einen Reifen, welcher auf der Felge angeordnet beziehungsweise auf die Felge aufgezogen ist. Dabei wird als der Umfang beispielsweise der Umfang, insbesondere ein Außenumfang, des Reifens ermittelt. Mit anderen Worten charakterisiert beispielsweise der Umfangswert den Umfang, insbesondere den Außenumfang, des Reifens. Insbesondere ist unter dem Umfang, der durch den Umfangswert charakterisiert wird, der effektive Abrollumfang zu verstehen, der sich während der Fahrt ändert beziehungsweise ändern kann, insbesondere je nach Geschwindigkeit, mit der das Fahrzeug gefahren wird. Der effektive Abrollumfang kann sich vom physikalischen Umfang unterscheiden, weil zum Beispiel das Rad beziehungsweise der Reifen, insbesondere bezüglich einer Fahrbahn, auf der der Reifen während der Fahrt abrollt, einen Mikro-Schlupf hat und somit minimal durchdreht. Der auch als effektiver Umfang bezeichnete, effektive Abrollumfang berücksichtigt damit nur die tatsächlich durch eine Umdrehung des Rads beziehungsweise Reifens zurückgelegte Strecke.

Außerdem wird bei dem Verfahren eine Radgeschwindigkeit des Rads in Abhängigkeit von der erfassten Drehzahl, insbesondere mittels einer elektronischen Recheneinrichtung, berechnet. Die elektronische Recheneinrichtung ist vorzugsweise Bestandteil beziehungsweise eine Komponente des Fahrzeugs. Beispielsweise wird die Drehzahl in der Einheit 1 pro Minute erfasst beziehungsweise verarbeitet. Die Radgeschwindigkeit des Rads wird beispielsweise derart in Abhängigkeit von der Drehzahl berechnet, dass die Drehzahl, insbesondere in der Einheit 1 pro Minute, mit einem Grundwert, insbesondere in der Einheit Meter, und mit $\pi$ multipliziert sowie durch 60 dividiert wird. Daraus resultiert, dass die Radgeschwindigkeit in der Einheit Meter pro Sekunde berechnet wird. Der Grundwert ist beispielsweise in einer, insbesondere elektronischen, Speichereinrichtung, insbesondere elektronischen Recheneinrichtung, gespeichert und wird insbesondere aus der Speichereinrichtung abgerufen. Der Grundwert ist beispielsweise ein vorgegebener und/oder empirisch ermittelter Wert oder wurde zuvor durch das erfindungsgemäße Verfahren ermittelt. Die Radgeschwindigkeit ist eine erste Geschwindigkeit beziehungsweise wird auch als erste Geschwindigkeit bezeichnet.

Außerdem wird bei dem Verfahren eine Referenzgeschwindigkeit des Fahrzeugs mittels eines Navigationssystems des Fahrzeugs satellitenbasiert ermittelt. Dabei wird die Referenzgeschwindigkeit auch als zweite Geschwindigkeit bezeichnet beziehungsweise die Referenzgeschwindigkeit hat eine zweite Geschwindigkeit. Da die Referenzgeschwindigkeit satellitenbasiert mittels des Navigationssystems des Fahrzeugs ermittelt, insbesondere erfasst, wird, wird die Referenzgeschwindigkeit auch als Navigationsgeschwindigkeit bezeichnet. Unter dem Merkmal, dass die Navigationsgeschwindigkeit (Referenzgeschwindigkeit) satellitenbasiert ermittelt wird, ist insbesondere zu verstehen, dass die Referenzgeschwindigkeit mittels des auch als Navigationseinrichtung bezeichneten Navigationssystems unter Zuhilfenahme von Satelliten ermittelt, insbesondere erfasst und/oder berechnet, wird. Als besonders vorteilhaft hat es sich dabei gezeigt, wenn die Navigationsgeschwindigkeit mittels des Navigationssystems über den Dopplereffekt berechnet wird.

Des Weiteren ist es bei dem Verfahren vorgesehen, dass der Umfangswert beziehungsweise der Umfang in Abhängigkeit von der, insbesondere berechneten, Radgeschwindigkeit und in Abhängigkeit von der, insbesondere ermittelten, Referenzgeschwindigkeit ermittelt, insbesondere geschätzt, wird.

Der Grundwert wird beispielsweise auch als Nominalwert bezeichnet und charakterisiert einen sogenannten Ausgangsumfang des Rads, wobei von dem Ausgangsumfang ausgegangen wird, um den Umfang beziehungsweise den Umfangswert als tatsächlichen Umfang beziehungsweise tatsächlichen Umfangswert des Rads, insbesondere des Reifens, durch das Verfahren zu ermitteln, insbesondere zu schätzen. Der Ausgangsumfang wird auch als nominaler Umfang, insbesondere als nominaler Rad- beziehungsweise Reifenumfang, bezeichnet.

Um nun den Umfangswert und somit den Umfang des Rads, insbesondere des Reifens, besonders präzise ermitteln, insbesondere schätzen, zu können, ist es erfindungsgemäß vorgesehen, dass, zusätzlich zu dem Umfangswert, wenigstens ein Dynamikwert, insbesondere mittels der elektronischen Recheneinrichtung, ermittelt, insbesondere berechnet, wird. Der Dynamikwert charakterisiert eine Dynamik zumindest einer der Geschwindigkeiten. Dabei wird das Ermitteln des Umfangswerts beziehungsweise des Umfangs in Abhängigkeit von dem Dynamikwert durchgeführt. Unter dem Merkmal, dass der Dynamikwert eine Dynamik der zumindest einen Geschwindigkeit charakterisiert, ist insbesondere zu verstehen, dass der Dynamikwert eine, insbesondere während der Fahrt des Fahrzeug stattfindende, Veränderung beziehungsweise Variierung der zumindest einen Geschwindigkeit charakterisiert, das heißt beschreibt beziehungsweise definiert. Wieder mit anderen Worten ausgedrückt ist unter der durch den Dynamikwert charakterisierten Dynamik eine Änderung, Veränderung oder Variierung der zumindest einen Geschwindigkeit zu verstehen. Vorzugsweise wird als die zumindest eine Geschwindigkeit die Referenzgeschwindigkeit (Navigationsgeschwindigkeit) verwendet. Der Erfindung liegt insbesondere die Erkenntnis zugrunde, dass ein etwaiger Unterschied zwischen der Referenzgeschwindigkeit und der Radgeschwindigkeit, das heißt eine etwaige Abweichung der Radgeschwindigkeit von der Referenzgeschwindigkeit beziehungsweise umgekehrt, nur dann besonders präzise ermittelt werden kann, wenn die zumindest eine Geschwindigkeit, anhand derer der Umfangswert ermittelt wird, insbesondere während des zuvor genannten Zeitintervalls hinreichend stark variiert. Die erwähnte starke Variation wird jedoch beispielsweise nur einmalig für die Synchronisation der Navigation- und Radgeschwindigkeit benötigt. Für die Schätzung selbst ist die Variation ohne Bedeutung. Die Schätzung kann auch bei einer konstanten Geschwindigkeit erfolgen. Anhand des etwaigen Unterschieds zwischen der Referenzgeschwindigkeit und der Radgeschwindigkeit kann vor dem Hintergrund, dass dieser Unterschied durch Berücksichtigung der Dynamik der zumindest einen Geschwindigkeit besonders präzise ermittelt werden kann, der Umfangswert besonders präzise ermittelt werden.

Um den Umfangswert beziehungsweise den Umfang präzise ermitteln, insbesondere schätzen, zu können, ist es bei der Erfindung vorgesehen, dass mehrere, die zumindest eine Geschwindigkeit charakterisierende Geschwindigkeitswerte der zumindest einen Geschwindigkeit ermittelt werden. Die Geschwindigkeitswerte werden beispielsweise zu jeweiligen Zeitpunkten, insbesondere während der Fahrt, ermittelt.

Dabei wird, wenn für die Geschwindigkeitswerte, welche die zumindest eine Geschwindigkeit charakterisieren, eine Regressionsgerade und anhand der Regressionsgeraden der Dynamikwert als ein Mittelwert der quadratischen Residuen ermittelt. In der Folge kann der Umfang beziehungsweise der Umfangswert besonders präzise ermittelt werden.

Eine weitere Ausführungsform zeichnet sich dadurch aus, dass das Ermitteln des Umfangswerts in Abhängigkeit von dem Dynamikwert, insbesondere dann und nur dann, durchgeführt wird, wenn der Mittelwert größer als ein insbesondere vorgebbarer oder vorgegebener Schwellenwert ist. Vorzugsweise ist der Schwellenwert größer als 0. Dieser Ausführungsform liegt die Erkenntnis zugrunde, dass der Mittelwert der quadratischen Residuen ein besonders gutes Maß für die Dynamik der zumindest einen Geschwindigkeit ist. Ist der Mittelwert kleiner oder gleich dem Schwellenwert, so kann darauf rückgeschlossen werden, dass die Dynamik der zumindest einen Geschwindigkeit unzureichend ist, um den Umfang des Rads, insbesondere des Reifens, hinreichend genau ermitteln, insbesondere schätzen, zu können. Überschreitet jedoch der Mittelwert den Schwellenwert, so kann in der Folge ein Versuch unternommen werden, zwei Geschwindigkeiten insbesondere in Form der Radgeschwindigkeit und der Navigationsgeschwindigkeit zu synchronisieren beziehungsweise die Wahrscheinlichkeit, dass die Geschwindigkeiten besonders präzise synchronisiert werden können, ist hoch, sodass dann eine Grundlage dafür geschaffen ist, dass der Umfangswert beziehungsweise der Umfang besonders präzise ermittelt, insbesondere geschätzt, werden kann.

Vorzugsweise werden die Geschwindigkeitswerte in einem ersten Puffer, insbesondere in einem ersten Ringpuffer, gespeichert. Hierdurch kann der Umfang besonders präzise ermittelt werden. Bei einer besonders vorteilhaften Ausführungsform der Erfindung werden mehrere, die jeweils andere Geschwindigkeit charakterisierende zweite Geschwindigkeitswerte der anderen Geschwindigkeit ermittelt. Ist die zumindest eine Geschwindigkeit die Referenz- beziehungsweise Navigationsgeschwindigkeit, so charakterisieren die ersten Werte die Referenzgeschwindigkeit. Dann ist die andere Geschwindigkeit die Radgeschwindigkeit, sodass dann die zweiten Geschwindigkeitswerte die Radgeschwindigkeit charakterisieren. Mit anderen Worten sind dann die ersten Geschwindigkeitswerte Werte der oder für die Referenzgeschwindigkeit, die zweiten Geschwindigkeitswerte sind Werte der oder für die Radgeschwindigkeit.

Um den Umfang besonders präzise und zeitgünstig ermitteln zu können, ist es in weiterer Ausgestaltung der Erfindung vorgesehen, dass die zweiten Geschwindigkeitswerte, welche die jeweils andere Geschwindigkeit charakterisieren, in einem zweiten Puffer, insbesondere in einem zweiten Ringpuffer, gespeichert werden. Der jeweilige Puffer ist beispielsweise Bestandteil der zuvor genannten, insbesondere elektronischen, Speichereinrichtung. Mit anderen Worten ist der jeweilige Puffer beispielsweise ein elektronischer Speicher, welcher Bestandteil der zuvor genannten, elektronischen Recheneinrichtung sein kann.

Bei einer weiteren, besonders vorteilhaften Ausführungsform der Erfindung wird wenigstens eine auch als Verschiebeschritt bezeichnete Verschiebung durchgeführt. Mit anderen Worten wird eine Verschiebung durchgeführt, welche beispielsweise in einem sogenannten Verschiebeschritt des Verfahrens erfolgt. Bei der Verschiebung werden die gespeicherten ersten Geschwindigkeitswerte und die gespeicherten zweiten Geschwindigkeitswerte zyklisch gegeneinander um einen Zeitschritt verschoben, wobei in Abhängigkeit von der Verschiebung wenigstens ein, insbesondere werte- oder betragsmäßiger, Unterschied zwischen den Geschwindigkeiten und/oder zumindest ein Verhältnis der Geschwindigkeiten ermittelt wird. Außerdem wird in Abhängigkeit von dem ermittelten Unterschied beziehungsweise in Abhängigkeit von dem ermittelten Verhältnis der Umfangswert ermittelt, insbesondere geschätzt. Insbesondere kann vorgesehen sein, dass aus den jeweiligen Geschwindigkeitswerten bei jeder Verschiebung Verhältnisse berechnet werden, und aus den Verhältnissen werden beispielsweise ein Mittelwert und eine Standardabweichung der Verhältnisse berechnet. In Abhängigkeit von dem Mittelwert und/oder der Standardabweichung wird dann beispielsweise der Umfangswert ermittelt, insbesondere geschätzt.

Vorzugsweise werden mehrere Verschiebungen und insbesondere so viele Verschiebungen durchgeführt, dass die Zielfunktion den Minimalwert passiert. Insbesondere wird der Umfangswert später in einem Kalman-Filter ermittelt, sobald die Synchronisation erfolgt ist.

Die ersten Geschwindigkeitswerte sind erste Inhalte des ersten Puffers, die zweiten Geschwindigkeitswerte sind zweite Inhalte des zweiten Puffers. Der Unterschied wird auch als Latenz bezeichnet und beispielsweise berechnet, sodass beispielsweise der Unterschied durch eine Latenzberechnung ermittelt wird. Somit ist es vorzugsweise für die Latenzberechnung vorgesehen, dass die auch als Pufferinhalte bezeichneten Inhalte zyklisch gegeneinander um einen Zeitschritt verschoben werden, insbesondere um eine Zielfunktion zu minimieren. Mit anderen Worten werden die Pufferinhalte zyklisch gegeneinander um einen Zeitschritt verschoben, wodurch eine insbesondere vorgebbare oder vorgegebene Zielfunktion minimiert wird. Wieder mit anderen Worten ausgedrückt werden die Pufferinhalte zyklisch gegeneinander um einen Zeitschritt derart verschoben, dass eine insbesondere vorgegebene oder vorgebbare Zielfunktion minimiert wird. Die Verschiebung beziehungsweise der Verschiebeschritt wird vorzugsweise mehrmals aufeinanderfolgend durchgeführt, sodass mehrere Verschiebungen durchgeführt werden. Vorzugsweise ist es vorgesehen, dass nach jeder Verschiebung die beziehungsweise alle zweiten Geschwindigkeitswerte durch die entsprechenden ersten Geschwindigkeitswerte dividiert werden oder umgekehrt. Darunter ist insbesondere zu verstehen, dass die ersten Geschwindigkeitswerte und die zweiten Geschwindigkeitswerte zu jeweiligen Zeitpunkten ermittelt wurden. Mit anderen Worten ist jedem ersten Geschwindigkeitswert, insbesondere genau, ein Zeitpunkt zugeordnet. Dem jeweiligen Zeitpunkt, dem der jeweilige erste Geschwindigkeitswert zugeordnet ist, ist jeweils, insbesondere genau, einer der zweiten Geschwindigkeitswerte zugeordnet, sodass der erste Geschwindigkeitswert und der zweite Geschwindigkeitswert, die demselben Zeitpunkt zugeordnet sind, einander entsprechen und demzufolge dividiert werden. Besonders vorteilhaft ist es, wenn die Navigationsgeschwindigkeit beziehungsweise die die Navigationsgeschwindigkeit charakterisierenden Geschwindigkeitswerte durch die Radgeschwindigkeit beziehungsweise durch die die Radgeschwindigkeit charakterisierenden Geschwindigkeitswerte dividiert wird beziehungsweise werden.

Aus der Division resultieren Divisionswerte. Aus den resultierenden Divisionswerten wird ein beziehungsweise der Mittelwert berechnet. Außerdem wird aus den resultierenden Divisionswerten eine Standardabweichung beziehungsweise die Standardabweichung berechnet. Die zuvor genannte Zielfunktion stellt dabei den Verlauf der berechneten Standardabweichungen in Abhängigkeit von einer zeitlichen Verschiebung, insbesondere zwischen den ersten Geschwindigkeitswerten und den zweiten Geschwindigkeitswerten, dar.

Um den Umfangswert besonders präzise ermitteln zu können, hat es sich als besonders vorteilhaft gezeigt, wenn ein die ersten Geschwindigkeitswerte umfassendes und dadurch die zumindest eine Geschwindigkeit, insbesondere über der Zeit und somit zeitlich, charakterisierendes erstes Signal und ein die zweiten Geschwindigkeitswerte umfassendes und dadurch die andere Geschwindigkeit, insbesondere über der Zeit und somit zeitlich, charakterisierendes zweites Signal, insbesondere zeitlich, synchronisiert werden. Hierdurch kann mit einer hohen Wahrscheinlichkeit gewährleistet werden, dass sowohl der dem jeweiligen Zeitpunkt zugeordnete erste Geschwindigkeitswert als auch der dem jeweiligen Zeitpunkt zugeordnete zweite Geschwindigkeitswert tatsächlich die jeweilige Geschwindigkeit zu dem jeweils zugehörigen Zeitpunkt charakterisieren beziehungsweise beschreiben. Dieser Ausführungsform liegt die Erkenntnis zugrunde, dass die Signale nur zeitlich verzögert ermittelt, insbesondere erfasst oder bereitgestellt, werden können. Dies bedeutet beispielsweise, dass der jeweilige erste Geschwindigkeitswert und der jeweilige zweite Geschwindigkeitswert, der eigentlich die jeweilige Geschwindigkeit zum selben Zeitpunkt charakterisieren, tatsächlich zeitlich aufeinanderfolgend ermittelt werden. Dies ist insbesondere deswegen der Fall, da die Referenzgeschwindigkeit gegenüber der Radgeschwindigkeit nur verzögert ermittelt werden kann. Diese zeitliche Verzögerung kann durch die Synchronisierung zumindest nahezu aufgehoben beziehungsweise kompensiert werden. Insbesondere ist es vorgesehen, dass im Rahmen der Synchronisation der jeweilige erste Geschwindigkeitswert und der jeweilige zweite Geschwindigkeitswert demselben Zeitpunkt zugeordnet werden, das heißt auf denselben Zeitpunkt bezogen werden. Wieder mit anderen Worten ausgedrückt ist es vorgesehen, dass der jeweilige erste Geschwindigkeitswert und der jeweilige zweite Geschwindigkeitswert für, insbesondere genau, einen, insbesondere bestimmten, Zeitpunkt definiert oder ermittelt werden. Hierdurch kann beispielsweise erreicht werden, dass ein etwaiger, auch als Verzögerungsunterschied bezeichneter, Unterschied zwischen den Signalen bei der beziehungsweise für die Ermittlung des Umfangs zumindest nahezu unberücksichtigt bleibt, wobei der zuvor genannte Verzögerungsunterschied aus der gegenüber der Ermittlung der Radgeschwindigkeit verzögernd erfolgenden Ermittlung der Referenzgeschwindigkeit und nicht etwa aus einem etwaigen Unterschied zwischen dem tatsächlichen Umfang und dem nominalen Umfang resultiert. In der Folge kann der tatsächliche Umfang besonders präzise ermittelt werden.

Ein zweiter Aspekt der Erfindung betrifft ein vorzugsweise als Kraftwagen, insbesondere Personenkraftwagen, ausgebildetes Kraftfahrzeug, welches zum Durchführen eines erfindungsgemäßen Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden ist ein Ausführungsbeispiel der Erfindung beschrieben. Hierzu zeigt:

Fig. 1      ein erstes Schaubild zum Veranschaulichen eines erfindungsgemäßen Verfahrens;

Fig. 2      ein zweites Schaubild zum Veranschaulichen des Verfahrens;

Fig. 3      ein drittes Schaubild zum Veranschaulichen des Verfahrens;

Fig. 4      ein viertes Schaubild zum Veranschaulichen des Verfahrens;

Fig. 5      ein fünftes Schaubild zum Veranschaulichen des Verfahrens;

Fig. 6      ein sechstes Schaubild zum Veranschaulichen des Verfahrens;

Fig. 7      ein siebtes Schaubild zum Veranschaulichen des Verfahrens;

Fig. 8      ein achtes Schaubild zum Veranschaulichen des Verfahrens;

Fig. 9      ein neuntes Schaubild zum Veranschaulichen des Verfahrens;

Fig. 10    ein zehntes Schaubild zum Veranschaulichen des Verfahrens;

Fig. 11    eine schematische Seitenansicht eines Rads, dessen Umfang mittels des Verfahrens besonders präzise ermittelt, insbesondere geschätzt, werden kann;

Fig. 12    ein elftes Schaubild zum Veranschaulichen des Verfahrens; und

Fig. 13    ein zwölftes Schaubild zum Veranschaulichen des Verfahrens;

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsform umfassen. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

Im Folgenden wird anhand der Fig. ein Verfahren zum Ermitteln wenigstens eines Umfangswerts beschrieben, welcher einen Umfang U eines Rads 10 eines Fahrzeugs charakterisiert. Mit anderen Worten wird beispielsweise im Rahmen des Verfahrens der Umfang U selbst des auch als Fahrzeugrad bezeichneten Rads 10 ermittelt, insbesondere geschätzt. Insbesondere ist unter dem Umfang U, der durch den Umfangswert charakterisiert wird, der effektive Abrollumfang zu verstehen, der sich während der Fahrt ändert beziehungsweise ändern kann, insbesondere je nach Geschwindigkeit, mit der das Fahrzeug gefahren wird. Der effektive Abrollumfang kann sich vom physikalischen Umfang unterscheiden, weil zum Beispiel das Rad 10, insbesondere bezüglich einer Fahrbahn, auf der das Rad 10 während der Fahrt abrollt, einen Mikro-Schlupf hat und somit minimal durchdreht. Der auch als effektiver Umfang bezeichnete, effektive Abrollumfang berücksichtigt damit nur die tatsächlich durch eine Umdrehung des Rads 10 zurückgelegte Strecke.

Das beispielsweise als Kraftwagen, insbesondere als Personenkraftwagen, ausgebildete Fahrzeug, welches vorzugsweise als ein Kraftfahrzeug ausgebildet ist, weist in seinem vollständig hergestellten Zustand das Rad 10 auf. Das Rad 10 ist ein Bodenkontaktelement, über welches das Fahrzeug in seinem vollständig hergestellten Zustand in Fahrzeughochrichtung nach unten an einem Boden 12 abgestützt oder abstützbar ist. Hierbei berührt das Rad 10 den Boden 12 direkt. Wird das Fahrzeug, insbesondere entlang einer Vorwärtsfahrrichtung, entlang des Bodens 12 gefahren, während das Fahrzeug in Fahrzeughochrichtung nach unten hin über das Rad 10 an dem Boden 12 abgestützt ist, rollt das Rad 10 an dem Boden 12 ab.

Bei dem in den Fig. gezeigten Ausführungsbeispiel weist das Rad 10 eine Felge 14 und einen separat von der Felge 14 ausgebildeten Reifen 16 auf, welcher auf der Felge 14 angeordnet, das heißt auf die Felge 14 aufgezogen und somit an der Felge 14 befestigt ist. Bei dem in den Fig. gezeigten Ausführungsbeispiel ist der Umfang U ein Außenumfang des Rads 10, insbesondere des Reifens 16. Das Rad 10 ist um eine Drehachse 17 relativ zu einem beispielsweise als selbsttragende Karosserie ausgebildeten Aufbau des Fahrzeugs drehbar, wobei sich der Umfang U in Umfangsrichtung des Rads 10 vollständig umlaufend um das Rad 10 und in einer Ebene erstreckt, welche senkrecht zur Drehachse 17 verläuft. Das Rad 10, insbesondere der Reifen 16, weist einen Radius R auf, welcher ein beziehungsweise der Außenradius des Rads 10, insbesondere des Reifens 16, ist. Der Radius R korrespondiert dabei derart mit dem Umfang U, dass folgende Beziehung gilt:

$$2 \cdot \pi \cdot R = U.$$

Außerdem gilt:

$$2 \cdot R = D.$$

Dabei ist mit D der beziehungsweise ein Durchmesser, insbesondere Außendurchmesser, des Rads 10, insbesondere des Reifens 16, bezeichnet. Während das Fahrzeug entlang des Bodens 12 gefahren wird, dreht sich das Rad 10 mit einer auch mit n bezeichneten Drehzahl um die Drehachse 17 relativ zu dem Aufbau, sodass das Rad 10 während der Fahrt mit der Drehzahl n an dem Boden 12 abrollt.

Bei dem Verfahren wird die Drehzahl des Rads 10, insbesondere während der Fahrt, mittels eines Sensors des Fahrzeugs erfasst. Außerdem wird bei dem Verfahren, insbesondere mittels einer elektronischen Recheneinrichtung des Fahrzeugs, eine Radgeschwindigkeit des Rads 10 in Abhängigkeit von der erfassten Drehzahl berechnet. Die Radgeschwindigkeit ist eine erste Geschwindigkeit oder wird auch als erste Geschwindigkeit bezeichnet. Beispielsweise ist das Rad 10 ein linkes Hinterrad, welches auch als HL bezeichnet wird. Somit wird beispielsweise die Radgeschwindigkeit mit $v_{HL}$ bezeichnet. Beispielsweise ergibt sich die Radgeschwindigkeit $v_{HL}$ in Abhängigkeit von der Drehzahl n zu:

$$v_{HL} = \pi \cdot D \cdot n/60.$$

Somit wird beispielsweise der Durchmesser D in der Einheit Meter mit der Drehzahl n in der Einheit 1 pro Minute und mit $\pi$ multipliziert und durch 60 dividiert. Daraus resultiert die Radgeschwindigkeit $v_{HL}$ in der Einheit Meter pro Sekunde.

Außerdem wird bei dem Verfahren eine auch als Navigationsgeschwindigkeit bezeichnete Referenzgeschwindigkeit des Fahrzeugs mittels eines Navigationssystems des Fahrzeugs satellitenbasiert ermittelt. Vorzugsweise wird die Navigationsgeschwindigkeit ebenfalls in der Einheit Meter pro Sekunde ermittelt. Außerdem ist es bei dem Verfahren vorgesehen, dass der Umfangswert beziehungsweise der Umfang U in Abhängigkeit von der berechneten Radgeschwindigkeit und in Abhängigkeit von der ermittelten Navigationsgeschwindigkeit ermittelt wird. Die Navigationsgeschwindigkeit wird dabei auch als zweite Geschwindigkeit bezeichnet beziehungsweise die Navigationsgeschwindigkeit ist eine zweite Geschwindigkeit.

Um nun den Umfang U beziehungsweise den den Umfang U charakterisierenden Umfangswert besonders präzise ermitteln, insbesondere schätzen, zu können, ist es - wie im Folgenden noch genauer erläutert wird - vorgesehen, dass, insbesondere mittels der elektronischen Recheneinrichtung, ein Dynamikwert ermittelt, insbesondere berechnet, wird. Der Dynamikwert charakterisiert oder beschreibt eine Dynamik, das heißt eine Variierung oder Veränderung zumindest einer der Geschwindigkeiten. Dabei wird das Ermitteln des Umfangswerts beziehungsweise des Umfangs U in Abhängigkeit von dem Dynamikwert durchgeführt.

Auf dem Gebiet der Kraftfahrzeugdynamik ist das Ermitteln, insbesondere das Schätzen, von Umfängen von Rädern sehr wichtig. Als der jeweilige Umfang und somit beispielsweise als der Umfang U wird beispielsweise der Umfang des Reifens 16 verwendet, wobei der Umfang U des Reifens 16 auch als Reifenumfang bezeichnet wird. Der ermittelte beziehungsweise geschätzte Reifenumfang wird beispielsweise verwendet, um eine Geschwindigkeit des Fahrzeugs zu ermitteln, welches mit der Geschwindigkeit entlang des Bodens 12 gefahren wird und/oder um wenigstens ein Fahrerassistenzsystem des Kraftfahrzeugs zu betreiben, insbesondere zu steuern oder zu regeln. Als der Durchmesser D, anhand dessen die Radgeschwindigkeit ermittelt wird, wird beispielsweise ein nominaler Reifendurchmesser eines nominalen Reifenumfangs verwendet. Insgesamt ist erkennbar, dass das Verfahren eine Umfangsschätzung des Rads 10, insbesondere des Reifens 16, ist, wobei diese beispielsweise als Reifenumfangsschätzung ausgebildete Umfangsschätzung auf der auch als Raddrehzahl bezeichneten Drehzahl und somit beispielsweise auf dem als Raddrehzahlsensor ausgebildeten Sensor, auf dem nominalen Reifenumfang sowie aus der Ermittlung, insbesondere aus einer Erfassung der Navigationsgeschwindigkeit basiert. Die Ermittlung, insbesondere die Erfassung, der Navigationsgeschwindigkeit erfolgt beispielsweise mittels eines Navigationssteuergeräts des Navigationssystems, sodass das Verfahren auf einer Geschwindigkeitsmessung des Navigationssteuergeräts basiert.

Die Bewegungsgeschwindigkeit eines Kraftfahrzeugs wird gewöhnlich aus den Raddrehzahlen aller Räder sowie dem nominalen Reifenumfang berechnet. Die daraus resultierende Größe ist die Radgeschwindigkeit. Der nominale Reifenumfang ist beispielsweise ein Mittelwert eines Reifenprogramms des Fahrzeugs beziehungsweise einer Variante des Fahrzeugs. Üblicherweise ist eine genaue Geschwindigkeitsberechnung aus folgenden Gründen problematisch:

- Die auf dem konkreten Fahrzeug montierten Reifen können einen Umfang aufweisen, der sich von dem nominalen Reifenumfang stark unterscheidet.
- Der effektive Reifenumfang, das heißt der tatsächliche Umfang U des Rads 10, dessen tatsächlicher Umfang U im Rahmen des Verfahrens ermittelt, insbesondere geschätzt, wird hängt von vielen Einflussfaktoren wie Fahrgeschwindigkeit, Reifentemperatur, Fahrbahnbeschaffenheit, Luftfeuchtigkeit etc. ab.

Je nach Fahrszenario können Reifen- beziehungsweise Radumfänge um mehr als 1 Prozent während der Fahrt schwanken. Eine genaue Ermittlung, insbesondere Schätzung, des Umfangs U soll solche Schwankungen abfangen, um eine zuverlässige Geschwindigkeitsberechnung zu ermöglichen. Dies ist nun durch das anhand der Fig. veranschaulichte Verfahren möglich.

Das anhand der Fig. beschriebene Verfahren basiert insbesondere auf zwei Aspekten:

- Für die Ermittlung, insbesondere Schätzung, des Umfangs U soll wenigstens eine Messung der echten Bewegungsgeschwindigkeit des Fahrzeugs als Referenz genutzt werden. Als diese echte Bewegungsgeschwindigkeit wird die Navigationsgeschwindigkeit verwendet. Mit anderen Worten stellt die Verwendung der Navigationsgeschwindigkeit insbesondere bei einer Geradeausfahrt des Fahrzeugs die zuvor genannte Referenz gut dar.
- Die Ermittlung, insbesondere Schätzung, des Umfangs U soll beispielsweise getrennt und/oder in unterschiedlichen Geschwindigkeitsbereichen stattfinden. Der Umfangswert ist beispielsweise ein Schätzwert. Wird somit das Verfahren in unterschiedlichen Geschwindigkeitsbereichen, das heißt bei unterschiedlichen Geschwindigkeiten, mit denen das Fahrzeug entlang des Bodens 12 gefahren wird, durchgeführt, so werden hierdurch mehrere und vorzugsweise voneinander unterschiedliche Umfangswerte und somit Schätzwerte ermittelt. Die Schätzwerte können in einem Speicher, das heißt beispielsweise in einem elektronischen Speicher der elektronischen Recheneinrichtung, abgelegt, das heißt gespeichert und beispielsweise je nach Geschwindigkeit während der Fahrt des Fahrzeugs ausgegeben werden.

Bekannte Ansätze zur Ermittlung, insbesondere Schätzung, von Radumfängen, insbesondere Reifenumfängen, basieren auf der Verwendung von Inertialsensorik. Bei einem ersten der bekannten Einsätze wird ein Zusammenhang zwischen den Radgeschwindigkeiten von Rädern einer Achse, insbesondere einer Hinterachse, Spurweite der Achse, insbesondere der Hinterachse, und in einer Kurvenfahrt generierter Gierrate genutzt. Zunächst werden Verhältnisse der Radumfänge in einer Geradeausfahrt ermittelt. Mit bekannten Radumfangsverhältnissen muss die Schätzung beispielsweise lediglich für eines der Räder durchgeführt werden. Die Gierrate wird im Verhältnis zwischen der Radgeschwindigkeitendifferenz und der Spurweite gleichgesetzt. In einem Ausgleichsverfahren werden dann Korrekturfaktoren der Radgeschwindigkeiten ermittelt, mit denen die aufgestellte Gleichung gültig ist. Die Spurweite wird in dem Verfahren als eine bekannte konstante Größe angenommen. In der Realität hängt sie jedoch von den montierten Reifen beziehungsweise Verwendung von Spurplatten ab. Außerdem hält die oben genannte Gleichung nur bei niedriger Fahrdynamik, das die Verwendung des Einsatzes in höhere Geschwindigkeiten nicht zulässt.

Bei dem zweiten der bekannten Einsätze wird versucht, den Zusammenhang zwischen Längsgeschwindigkeit und Längsbeschleunigung zu nutzen. Dabei wird entweder die Längsbeschleunigung integriert oder die Längsgeschwindigkeit differenziert. Die resultierenden Größen werden entsprechend der Längsgeschwindigkeit beziehungsweise der Längsbeschleunigung gleichgesetzt. Anschließend werden in einem Ausgleichsverfahren die Korrekturfaktoren gesucht, mit denen die Gleichungen halten. Der Einsatz hat folgende Schwächen:

- Damit die Integration der Längsbeschleunigung einen brauchbaren Wert liefert, muss das Beschleunigungssignal vom sogenannten Sensoroffset, das heißt von einer Sensorabweichung, bereinigt werden. Der auch einfach als Offset oder Abweichung bezeichnete Sensoroffset ist dabei eine dynamische Größe, was eine Schätzung des Offsets und die Bereinigung stark erschwert. Außerdem muss das Beschleunigungssignal vor der Schätzung des Offsets gravitationskompensiert sein, was nur bei einer sehr präzisen Nickwinkelschätzung möglich ist.
- Die Radgeschwindigkeit-Differenzierung resultiert in einem stark verrauschten Signal, weil die Radgeschwindigkeiten aus Radimpulsen mit relativ niedriger Auflösung berechnet werden. Eine eventuelle Tiefpass-Filterung an der Stelle bringt eine zusätzliche Signalverzögerung und reduziert die Schätzungsgenauigkeit.

In den beschriebenen Verfahren beziehungsweise in den bekannten Ansätzen werden Korrekturfaktoren für die Radgeschwindigkeiten ermittelt. Da die Reifenumfänge im direkten Zusammenhang mit den Radgeschwindigkeiten stehen, können die geschätzten Korrekturfaktoren auf den nominalen Reifenumfang angewendet werden, um die gesuchten Reifenumfänge zu erhalten.

Bei dem anhand der Fig. veranschaulichten Verfahren werden beispielsweise Korrekturfaktoren ermittelt, insbesondere geschätzt, durch welche beispielsweise, insbesondere alle, geschwindigkeitsbezogenen Größen wie beispielsweise die Reifenumfänge korrigiert werden sollen beziehungsweise können.

Die Navigationsgeschwindigkeit wird bei einem guten Satellitenempfang als eine genaue Geschwindigkeitsmessung des vorzugsweise als Kraftfahrzeug ausgebildeten Fahrzeugs angenommen. Für die Radgeschwindigkeit werden beispielsweise in einem Ausgleichsverfahren, insbesondere unter Zuhilfenahme wenigstens eines Kalman-Filters, solche Korrekturfaktoren ermittelt, mit denen die korrigierten Radgeschwindigkeiten der Navigationsgeschwindigkeit insbesondere bei einer Geradeausfahrt gleich sind. Um die Ermittlung, insbesondere Schätzung des Umfangs U auf eines der Räder des Fahrzeugs zu begrenzen, welches beispielsweise genau vier Räder aufweist, werden beispielsweise zunächst Reifenumfangsverhältnisse bezüglich eines Referenzrads ermittelt, durch die die restlichen Korrekturfaktoren aus dem Korrekturfaktor des Referenzrads berechnet werden können. Als das Referenzrad wird beispielsweise das linke hintere Rad beziehungsweise das Rad 10 genutzt.

Erfahrungsgemäß hat jedoch die Navigationsgeschwindigkeit folgende Nachteile, die die Verwendung eines die Navigationsgeschwindigkeit charakterisierenden Rohsignals erschweren. Mit anderen Worten wird beispielsweise ein auch als Rohsignal bezeichnetes, insbesondere elektrisches, Signal ermittelt, welches die Navigationsgeschwindigkeit charakterisiert. Das die Navigationsgeschwindigkeit charakterisierende Signal wird auch als Navigationssignal bezeichnet:

- Das Navigationssignal ist nicht ASIL-abgesichert und kann daher für sicherheitsrelevante Berechnungen herkömmlicherweise nicht genutzt werden.
- Das Navigationssignal hat eine signifikante Verzögerung im Vergleich zu der Radgeschwindigkeit, das heißt im Vergleich zu der Ermittlung der Radgeschwindigkeit beziehungsweise im Vergleich zu einem auch Radsignal bezeichneten, insbesondere elektrischen, Signal, welches die Radgeschwindigkeit charakterisiert und demzufolge beispielsweise ermittelt wird. Insbesondere kann eine Verzögerung des Navigationssignals gegenüber dem Radsignal 0,5 bis 1 Sekunde betragen, insbesondere je nach GNSS-Empfänger, mittels welchem die Navigationsgeschwindigkeit satellitenbasiert ermittelt wird.
- Das Navigationssignal hat eine geringere Update- beziehungsweise Erneuerungsrate als das Radsignal.

Das Radsignal wird auch als erstes Signal bezeichnet und umfasst beispielsweise mehrere erste Geschwindigkeitswerte, welche auch als Radgeschwindigkeitswerte bezeichnet werden und die Radgeschwindigkeit charakterisieren. Das Navigationssignal wird beispielsweise auch als zweites Signal bezeichnet und umfasst mehrere zweite Geschwindigkeitswerte, welche beispielsweise auch als Navigationsgeschwindigkeitswerte bezeichnet werden und die Navigationsgeschwindigkeit charakterisieren.

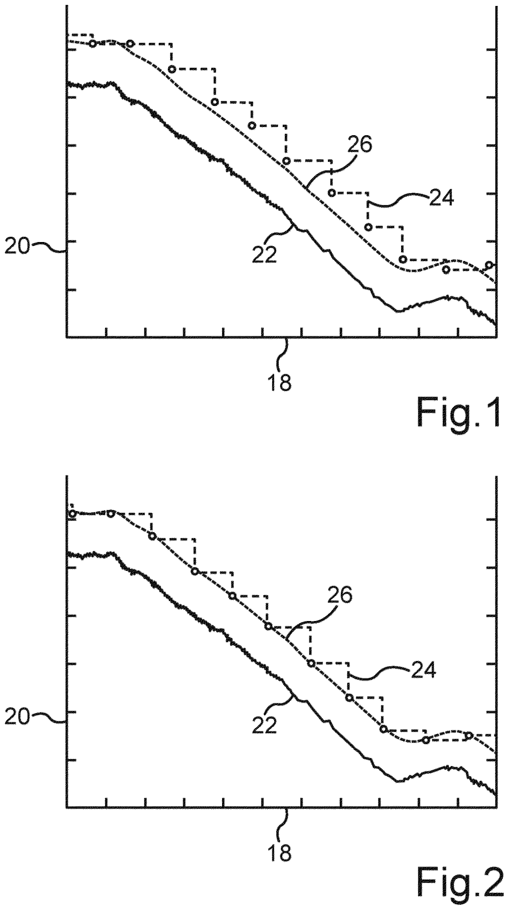

Die oben genannte Verzögerung sowie die geringere Updaterate können beispielsweise aus Fig. 1 entnommen werden. Fig. 1 zeigt ein Diagramm, auf dessen Abszisse 18 die Zeit aufgetragen ist. Auf der Ordinate 20 ist die Geschwindigkeit insbesondere in der Einheit Meter pro Sekunde aufgetragen. Ein in das in Fig. 1 gezeigte Diagramm eingetragener Verlauf 22 veranschaulicht die Radgeschwindigkeit über der Zeit, und ein in das in Fig. 1 gezeigte Diagramm eingetragener Verlauf 24 veranschaulicht die Navigationsgeschwindigkeit über der Zeit. Außerdem veranschaulichen in Fig. 1 Kreise Erneuerungsbeziehungsweise Updatepunkte, an denen die Navigationsgeschwindigkeit aufs Neue ermittelt wird. Außerdem veranschaulicht ein in das in Fig. 1 gezeigte Diagramm eingetragener Verlauf 26 eine Referenzgeschwindigkeit. Um die Verzögerung des Navigationssignals gegenüber dem Radsignal zu kompensieren, werden die auch als Geschwindigkeitssignale bezeichneten und in Fig. 1 durch die Verläufe 22 und 24 veranschaulichten Signale synchronisiert. Fig. 2 zeigt die Verläufe 22 und 24 und somit die Geschwindigkeitssignale nach der Synchronisation. Aufgrund der Verzögerung weisen die Signale insbesondere in ihrem jeweiligen Signalniveau einen Versatz auf, wobei der Versatz ein Versatz zwischen der Radgeschwindigkeit und der Navigationsgeschwindigkeit ist. Dieser Versatz im Signalniveau zwischen der Radgeschwindigkeit und der Navigationsgeschwindigkeit entspricht beispielsweise einem beziehungsweise dem gesuchten Korrekturfaktor. Insbesondere werden die Signale derart synchronisiert, dass einem jeweiligen Zeitpunkt eines Zeitintervalls, für das beziehungsweise in welchem beispielsweise die Radschwindigkeit ermittelt wird, genau einer der Navigationsgeschwindigkeitswerte und genau einer der Radgeschwindigkeitswerte zugeordnet werden. Dies wird für mehrere und vorzugsweise alle Zeitpunkte des insbesondere vorgebbaren oder vorgegebenen Zeitintervalls durchgeführt. Nach der Synchronisation ist die erwähnte Verzögerung bereits eliminiert. Der Versatz wird jetzt komplett durch den gesuchten Korrekturfaktor verursacht.

Die auch als Geschwindigkeitssynchronisation bezeichnete Synchronisation wird vorzugsweise nach jeder Zündung, das heißt für jeden Klemme-15-Zyklus, erneut durchgeführt. Dadurch wird die aktuelle Verzögerungszeit des Navigationssignals sichergestellt, die von vielen Faktoren abhängig ist und theoretisch in unterschiedlichen Klemme-15-Zyklen variieren kann. Eine erfolgreich durchgeführte Synchronisation soll nach dem Navigationsgeschwindigkeitsupdate validiert und bei Bedarf verworfen und erneut hergestellt werden.

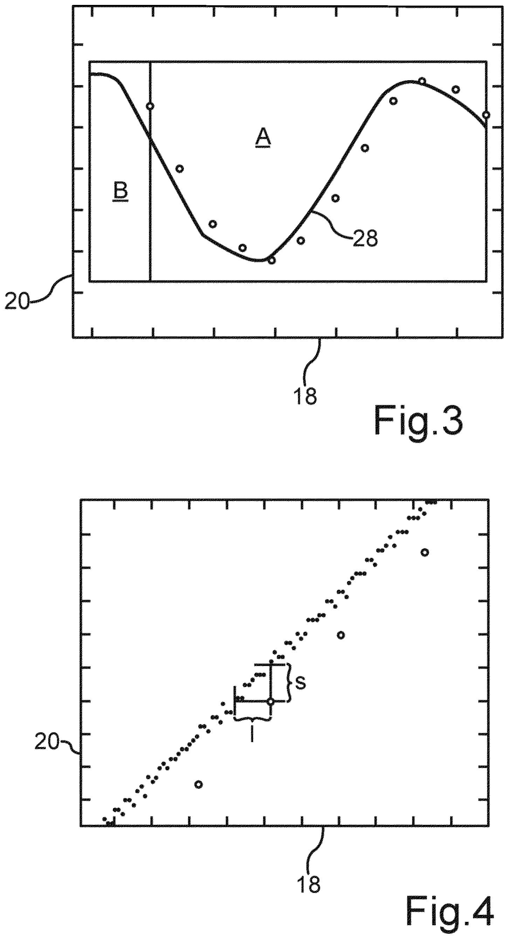

Beispielsweise durch Fig. 3 ist veranschaulicht, dass für die Synchronisation der Signale die Radschwindigkeitswerte und die Navigationsgeschwindigkeitswerte in jeweilige Ringpuffer gespeichert werden. In Fig. 3 veranschaulicht ein Verlauf 28 die Radgeschwindigkeit, und in Fig. 3 veranschaulichen Kreise die Navigationsgeschwindigkeit. Da die Navigationsgeschwindigkeit gegenüber der Radgeschwindigkeit zeitlich verzögert ist, umfassen die Einträge des Ringpuffers, in welchem die Radgeschwindigkeit eingetragen wird, sowohl denselben Teil beziehungsweise dieselbe Strecke, die deren Puffer, in die die Navigationsgeschwindigkeitswerte eingetragen werden, als auch einen vorweggehenden Teil beziehungsweise eine vorweggehende Strecke, die der maximal möglichen und auch als Latenz bezeichneten Verzögerung der Navigationsgeschwindigkeit gegenüber der Radgeschwindigkeit entspricht. Dieselbe Strecke beziehungsweise derselbe Teil ist in Fig. 3 mit A bezeichnet, und die vorweggehende Strecke beziehungsweise der vorweggehende Teil ist in Fig. 3 mit B bezeichnet.

Vorzugsweise werden die Ringpuffer nur bei einer Geradeausfahrt beziehungsweise in Geradeausfahrten befüllt, um beispielsweise etwaige Auswirkungen einer Einbauposition des auch als GNSS-Antenne bezeichneten GNSS-Empfängers zu eliminieren. Außerdem ist es von Vorteil, Fahrbahnsteigung und minimale beziehungsweise maximale Fahrzeuggeschwindigkeit sowie Beschleunigung zu begrenzen und Schlupf- beziehungsweise Fahrwerkregeleingriffe auszuschließen. Die Qualität des GNS-Empfangs soll anhand der Anzahl verwendeter Satelliten sowie des GDUP-Werts kontrolliert werden.

Sobald beide, einfach auch als Puffer bezeichnete Ringpuffer befüllt sind, sollte sichergestellt werden, dass zumindest eine der Geschwindigkeiten, insbesondere die Navigationsgeschwindigkeit, eine hinreichende Dynamik aufweist. Da die jeweiligen Geschwindigkeitswerte zu jeweiligen, aufeinanderfolgenden Zeitpunkten gehören, bilden die jeweiligen Geschwindigkeitswerte und somit das jeweilige Signal einen jeweiligen Geschwindigkeitsverlauf. Somit wird beispielsweise sichergestellt, dass zumindest einer der Geschwindigkeitsverläufe, insbesondere der Geschwindigkeitsverlauf der Navigationsgeschwindigkeit, eine hinreichende Dynamik aufweist. Ist dies nicht der Fall, kann eine Latenzberechnung, das heißt eine Ermittlung eines etwaigen Unterschieds zwischen den Signalen nicht eindeutig durchgeführt werden. Die Navigationsgeschwindigkeit und die Radgeschwindigkeit unterscheiden sich nicht nur durch ihre Zeitachsen, das heißt beispielsweise nicht nur durch ihre zeitliche Verzögerung, sondern auch durch den gesuchten Korrekturfaktor voneinander, der hier als eine Skalierung wahrgenommen wird. Weisen die Geschwindigkeiten eine sehr niedrige Dynamik auf, was beispielsweise in Fig. 4 gezeigt ist, so ist das System unterbestimmt: Eine Geschwindigkeitsdifferenz, das heißt eine Differenz beziehungsweise ein Unterschied zwischen den Geschwindigkeiten, kann sowohl durch die zuvor genannte Verzögerung I als auch durch einen korrekturfaktorabhängigen Versatz s erklärt werden. In Fig. 4 veranschaulichen Kreise die Navigationsgeschwindigkeit, und die Radgeschwindigkeit ist in Fig. 4 durch ausgefüllte Punkte gezeigt. Wie aus Fig. 4 erkennbar ist, bezieht sich die auch als Latenz bezeichnete, insbesondere zeitliche Verzögerung I auf eine zeitliche Verzögerung und somit auf die Zeitbasis, während sich der Versatz s auf einen etwaigen, betragsmäßigen beziehungsweise wertemäßigen Unterschied zwischen den Geschwindigkeitswerten bezieht.

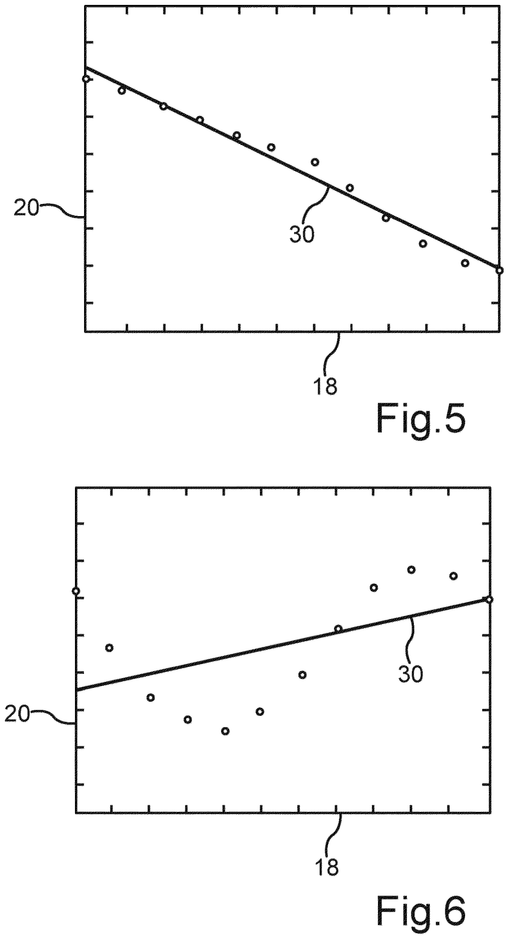

Bei dem Verfahren wird die auch als Geschwindigkeitsdynamik bezeichnete Dynamik überprüft. Für die Überprüfung der Geschwindigkeitsdynamik, das heißt um zu überprüfen, ob die Dynamik hinreichend groß ist, wird für die Navigationsgeschwindigkeitswerte eine Regressionsgerade ermittelt, und anschließend wird der Mittelwert der quadratischen Residuen ermittelt. Dieser Mittelwert wird auch als MRS-Wert bezeichnet und ist beispielsweise der zuvor genannte Dynamikwert. Liegt beispielsweise der MRS -Wert unterhalb eines beispielsweise vordefinierten Schwellenwerts, gilt die Dynamik als niedrig. Insbesondere gilt dann die Dynamik als zu niedrig, um einen Synchronisationsversuch zur Synchronisation der Geschwindigkeiten vorzunehmen. Wird ein solcher Synchronisationsversuch beziehungsweise die Synchronisation der Geschwindigkeiten nicht durchgeführt, wird auch nicht mit einer Schätzung des Umfangs U begonnen. Mit anderen Worten, die Synchronisation der Geschwindigkeiten wird in Abhängigkeit von dem Dynamikwert und beispielsweise dann durchgeführt, wenn der Dynamikwert den Schwellenwert überschreitet. Der Dynamikwert beziehungsweise die Überschreitung des Schwellenwerts durch den Dynamikwert ist eine Basis oder eine Voraussetzung für die Durchführung der Synchronisation der Geschwindigkeiten. Die durchgeführte Synchronisation der Geschwindigkeit ist eine Basis beziehungsweise Voraussetzung für das Ermitteln beziehungsweise Schätzen des Umfangs U, sodass, insbesondere indirekt oder mittelbar, der Dynamikwert beziehungsweise die Überschreitung des Schwellenwerts durch den Dynamikwert die Basis oder Voraussetzung für das Ermitteln beziehungsweise Schätzen des Umfangswerts, mithin des Umfangs U ist. Sind also der Dynamikwert und somit die Dynamik hinreichend hoch, so können in der Folge die Geschwindigkeiten synchronisiert und daraus folgend der Umfang U hinreichend genau ermittelt, insbesondere geschätzt, werden. Dies ist in Fig. 5 gezeigt. In Fig. 5 veranschaulichen Kreise die Navigationsgeschwindigkeitswerte, und die für die Navigationsgeschwindigkeitswerte ermittelte Regressionsgerade ist in Fig. 5 mit 30 bezeichnet. Der MRS -Wert charakterisiert beispielsweise eine Streuung der Navigationsgeschwindigkeitswerte und beträgt gemäß Fig. 5 beispielsweise 0,06.

Ist der MRS -Wert hinreichend hoch, so sind die Auswirkungen der zeitlichen Latenz I und des Versatzes s auf den Geschwindigkeitsunterschied, das heißt auf den Unterschied zwischen der Navigationsgeschwindigkeit und der Radgeschwindigkeit, voneinander trennbar, und die Latenz beziehungsweise die Verzögerung I kann eindeutig bestimmt werden, was beispielsweise in Fig. 6 veranschaulicht ist. Auch in Fig. 6 veranschaulichen die Kreise die Navigationsgeschwindigkeitswerte. In Fig. 6 ist die für die Navigationsgeschwindigkeitswerte ermittelte Regressionsgerade ebenfalls mit 30 bezeichnet und gemäß Fig. 6 beträgt der MRS -Wert 1,73.

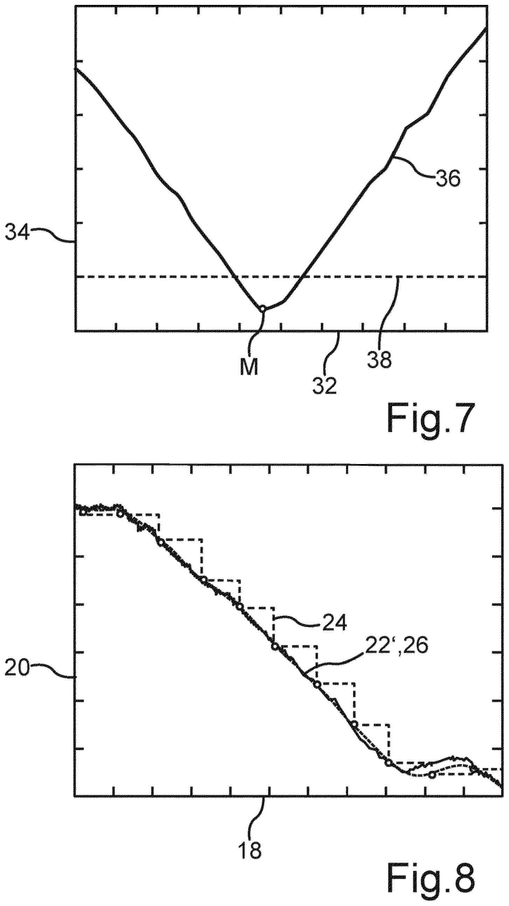

Für die Latenzberechnung, das heißt für die Ermittlung des zeitlichen Unterschieds zwischen der Radgeschwindigkeit und der Navigationsgeschwindigkeit, werden beispielsweise die Inhalte der Ringpuffer, das heißt die in den Ringpuffern gespeicherten Geschwindigkeitswerte, zyklisch gegeneinander um einen Zeitschritt verschoben, insbesondere derart, dass eine insbesondere vorgegebene oder vorgebbare Zielfunktion minimiert wird. Dies ist aus Fig. 7 erkennbar. Fig. 7 zeigt ein Diagramm, auf dessen Abszisse 32 die zeitliche Verschiebung beziehungsweise der zeitliche Unterschied zwischen der Radgeschwindigkeit und der Navigationsgeschwindigkeit aufgetragen ist. Auf der Ordinate 34 ist die Standardabweichung aufgetragen. Ein in das in Fig. 7 gezeigte Diagramm eingetragener Verlauf 36 veranschaulicht die Zielfunktion, und eine gestrichelte Gerade 38 veranschaulicht einen Schwellenwert der maximalen Standardabweichung. Außerdem ist in Fig. 7 das Minimum der Zielfunktion mit m bezeichnet. An der Stelle, an der der Verlauf 36 sein Minimum m hat, entspricht die zeitliche Verschiebung der gesuchten Latenz. Nach jeder Verschiebung werden alle Navigationsgeschwindigkeitswerte durch die entsprechenden Radgeschwindigkeitswerte dividiert. Daraus resultieren Divisionswerte, aus denen ein beziehungsweise der Mittelwert sowie die Standardabweichung berechnet werden. Die Zielfunktion stellt den Verlauf der berechneten Standardabweichung in Abhängigkeit von der zeitlichen Verschiebung dar. Die Latenzberechnung wird als erfolgreich eingestuft, falls die Standardabweichung für die Verschiebung, bei der die Zielfunktion ihren Minimalwert, das heißt ihr Minimum M, erreicht, unter dem Schwellenwert (Gerade 38) liegt. Der Mittelwert von Verhältnissen zwischen den Navigations- und Radgeschwindigkeiten entspricht einer groben Schätzung des Reifenumfangkorrekturfaktors und wird im Weiteren Skalierungsfaktor genannt. Wenn die Radgeschwindigkeit mit dem Skalierungsfaktor korrigiert wird, entspricht sie näherungsweise der synchronisierten Navigationsgeschwindigkeit, wie aus Fig. 8 erkennbar ist. Beispielsweise durch Multiplizieren der in Fig. 1 gezeigten Radgeschwindigkeit mit dem Skalierungsfaktor entsteht eine sogenannte skalierte Radgeschwindigkeit, die zumindest im Wesentlichen der Navigationsgeschwindigkeit entspricht. Dabei ist die skalierte Radgeschwindigkeit in Fig. 8 mit 22' bezeichnet.

Vorzugsweise ist außerdem eine Absicherung der Navigationsgeschwindigkeit vorgesehen. Damit die synchronisierte Navigationsgeschwindigkeit für die sicherheitsrelevante Berechnung verwendet werden kann, soll sie abgesichert werden. Für die Absicherung wird eine Validierung gegen die Radgeschwindigkeit durchgeführt, die bereits abgesichert ist. Davor soll die Radgeschwindigkeit mit dem bereits berechneten Skalierungsfaktor korrigiert werden. Solange die Navigationsgeschwindigkeit in einem Toleranzschlauch um die skalierte Radgeschwindigkeit liegt, kann sie auch als abgesichert gelten. Verlässt die Navigationsgeschwindigkeit den Toleranzschlauch mehrfach in aufeinanderfolgenden Aktualisierungszyklen, so soll die Absicherung blockiert und die geschätzte Latenz verworfen werden. In diesem Fall beginnt der Synchronisationsversuch im nächsten Zyklus von vorne.

Im Folgenden wird die Navigationsgeschwindigkeit beispielsweise auch mit $v_{nav}$ bezeichnet. Sobald die Navigationsgeschwindigkeit abgesichert und mit der Radgeschwindigkeit $v_{HL}$ synchronisiert ist, kann der auch mit $K_{HL}$ bezeichnete Korrekturfaktor mithilfe eines Kalman-Filters geschätzt werden. Die genannten Größen stehen in folgendem Verhältnis:

$$v_{nav} = K_{HL} \cdot v_{HL}.$$

Das Kalman-Filter wird durch folgende Vektoren und Matrizen beschrieben:

Zustandsvektor:

$$\hat{x} = \begin{bmatrix} K_{HL}^{st} \\ v_{HL}^{st} \end{bmatrix}$$

Messvektor:

$$z = \begin{bmatrix} v_{nav}^{in} \\ v_{HL}^{in} \end{bmatrix}$$

Messfunktion:

$$h = \begin{bmatrix} v_{HL}^{st} \\ v_{HL}^{st} \\ \dfrac{v_{HL}^{st}}{K_{HL}^{st}} \end{bmatrix}$$

Beobachtungsmatrix:

$$H = \begin{bmatrix} 0 & 1 \\ -\dfrac{v_{HL}^{st}}{(K_{HL}^{st})^2} & \dfrac{1}{K_{HL}^{st}} \end{bmatrix}$$

Systemfortschrittsmatrix:

$$F = \begin{bmatrix} 1 & 0 \\ 0 & 1 \end{bmatrix}$$

Der Zustandsvektor $\hat{x}$ wird mit folgenden Werte initialisiert:

$$\hat{x}_0 = \begin{bmatrix} 1.0 \\ v_{HL}^{in} \end{bmatrix}$$

Der auch als Reifenumfang bezeichnete Umfang des Referenzrads am Schätzungsanfang wird also gleich dem nominalen Reifenumfang angenommen. Die Schätzung verläuft während der ganzen Fahrt. Der geschätzte Korrekturfaktor wird aber erst dann verwendet, wenn das Filter konvergiert hat. Die Filterkonvergenz wird anhand der mitgeschätzten Varianz des Korrekturfaktors beurteilt (Element [0][0] der Kovarianzmatrix).

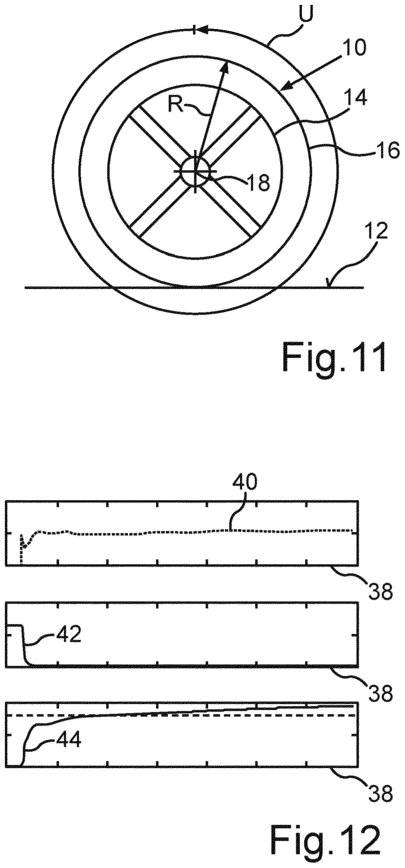

Um die Interpretation der Varianzwerte zu vereinfachen, wird eine sogenannte Statusfunktion eingeführt, die die Varianzwerte auf einer Skala von 0 bis 99 abbildet. Je kleiner die Varianz ist, desto höher ist der Statuswert und damit genauer die Schätzung. Erreicht der Status einen vordefinierten Schwellenwert S*, so gilt die Schätzungsgenauigkeit als ausreichend gut und der geschätzte Korrekturfaktor kann verwendet werden. Typische Signalverläufe des Korrekturfaktors, seiner Varianz und der Statusfunktion sind aus Fig. 12 erkennbar. Fig. 12 zeigt Diagramme, auf deren Abszissen 38 die Zeit aufgetragen ist. Dabei ist der Korrekturfaktor durch einen Verlauf 40, eine Varianz des Korrekturfaktors durch einen Verlauf 42 und die Statusfunktion durch einen Verlauf 44 veranschaulicht. Der Schwellenwert der Statusfunktion liegt beispielsweise bei 80.

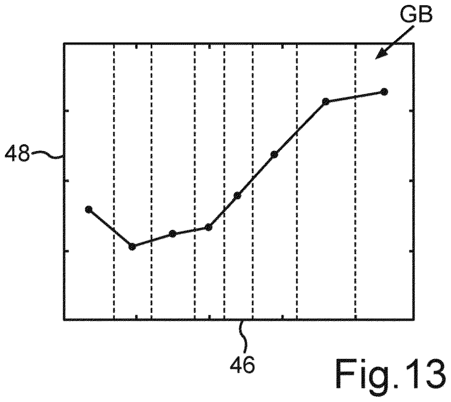

Die vorgeschlagene Ermittlung, insbesondere Schätzung, mithilfe eines Kalman-Filters funktioniert zuverlässig insbesondere unter der Annahme, dass der echte Reifenumfang während der Fahrt zumindest nahezu konstant bleibt. In der Realität wird er durch unterschiedliche Faktoren beeinflusst und kann sich signifikant ändern. Eine der einflussreichsten Faktoren ist die Fahrzeuggeschwindigkeit, wie aus Fig. 13 erkennbar ist. Fig. 13 zeigt ein Diagramm, auf dessen Abszisse 46 die Geschwindigkeit insbesondere in der Einheit Kilometer pro Stunde aufgetragen ist. Auf der Ordinate 48 ist der Korrekturfaktor aufgetragen, welcher für unterschiedliche Geschwindigkeitsbereiche GB unterschiedlich ist. Somit ist es von Vorteil, die Schätzung des Umfangs U beziehungsweise des Umfangswerts separat in unterschiedlichen Geschwindigkeitsbereichen durchzuführen. Wie aus Fig. 13 erkennbar ist, werden beispielsweise acht unterschiedliche Geschwindigkeitsbereiche GB verwendet. Jeweilige Grenzen der Geschwindigkeitsbereiche GB sind zumindest nahezu frei wählbar. Die resultierenden Geschwindigkeitsbereiche GB müssen nicht notwendigerweise äquidistant sein, wie in Fig. 13 exemplarisch gezeigt ist. Vorzugsweise sollte jedoch der gesamte Geschwindigkeitsbereich komplett abgedeckt werden.

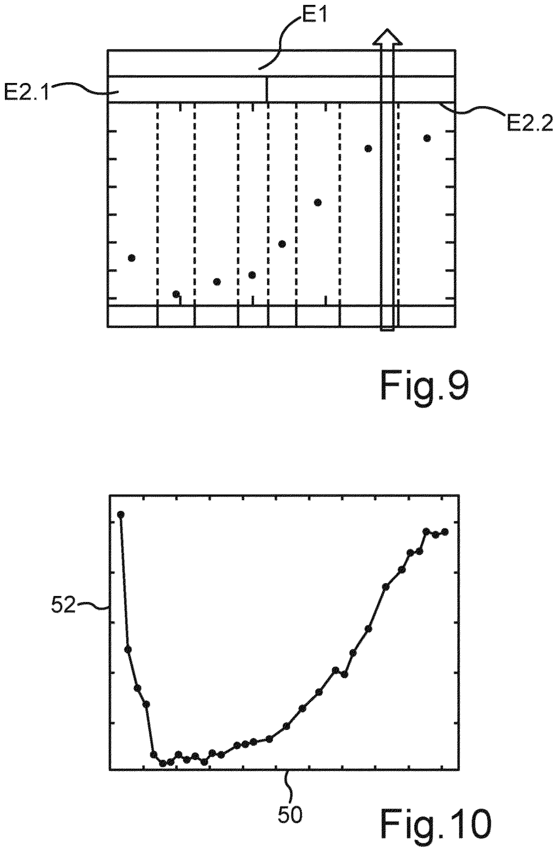

Um eine besonders hohe Verfügbarkeit der Schätzung des Umfangs U zu realisieren, werden - wie aus Fig. 9 erkennbar ist - Rückfallebenen eingeführt.

Eine mit E1 bezeichnete erste der Rückfallebenen beinhaltet den Mittelwert der geschätzten Korrekturfaktoren aller Geschwindigkeitsbereiche, in denen die Statusfunktion den Schwellenwert S* erreicht hat. Eine zweite, mit E2.1 bezeichnete der Rückfallebenen und eine dritte, mit E2.2 bezeichnete der Rückfallebenen sind unterhalb der Rückfallebene E1 und auf gleicher Höhe angeordnet. Die Rückfallebenen E2.1 und E2.2 beinhalten einen Mittelwert der geschätzten Korrekturfaktoren der Geschwindigkeitsbereiche 1 bis 4 beziehungsweise 5 bis 8, in dem die Statusfunktion den Schwellenwert S* erreicht hat.

Die Rückfallebenen E2.1 und E2.2 bilden somit eine zweite Gesamtrückfallebene. Bei jedem Aufruf wird der auszugebende Korrekturfaktor wie folgt bestimmt:

- Ist der Statuswert des Filters im aktiven Geschwindigkeitsbereich GB größer gleich S*, so wird der Korrekturfaktor aus dem Filter mit seinem Statuswert ausgegeben.
- Sonst wird die Verfügbarkeit des Werts der entsprechenden Hälfte der zweiten Rückfallgesamtebene (Rückfallebenen E2.1 und E2.2) geprüft und gegebenenfalls ausgegeben. Als Statuswert wird S* ausgegeben. Wenn die zweite Rückfallgesamtebene keinen Wert hat, so wird der Wert aus der Rückfallebene E1 genommen. Als Statuswert wird S* ausgegeben.
- Wenn die Rückfallebene E1 keinen Wert hat, so wird der Korrekturfaktor aus dem aktiven Filter genommen. Als Statuswert wird der Statuswert des aktiven Filters ausgegeben.

Eine Einführung der Rückfallebenen bringt folgende Vorteile:

- Sobald die Schätzung mindestens in einem der Geschwindigkeitsbereiche GB abgeschlossen ist, kann ein verwendbarer Korrekturfaktor in allen anderen Bereichen ausgegeben werden. Die reduzierte Schätzungsgenauigkeit in Bereichen ohne eigenes Schätzergebnis wird dabei durch das Absenken vom Statuswert signalisiert.
- Die Aufspaltung der zweiten Rückfallgesamtebene in zwei Hälften, mithin in die Rückfallebenen E2.1 und E2.2 verhindert, dass die Schätzungen aus niedrigeren und höheren Geschwindigkeiten einander gegenseitig negativ beeinflussen.

Je nach verbautem Navigationssystem und somit je nach verbautem Navigationssteuergerät des Navigationssystems und seinen Eigenschaften, insbesondere im Hinblick auf die Erneuerungsfrequenz zur Erneuerung der Navigationsgeschwindigkeit, können die Anzahl der Geschwindigkeitsbereiche GB sowie die Anzahl der Rückfallebenen erhöht werden. Für eine effizientere Suche der Geschwindigkeitsbereiche GB sowie für die Zuweisung der Rückfallebenen empfiehlt sich eine Anzahl der Geschwindigkeitsbereiche als Zweierpotenz.

Fig. 10 zeigt ein Diagramm, auf dessen Abszisse 50 die Geschwindigkeit insbesondere in Kilometer pro Stunde aufgetragen ist. Auf der Ordinate 52 ist der Korrekturfaktor aufgetragen. Somit zeigt Fig. 10 Ergebnisse einer hochgenauen Korrekturfaktorschätzung mit einem Empfänger, welche eine Erneuerungsfrequenz von 50 Hertz aufweist. In dieser Schätzung wurden 64 Geschwindigkeitsbereiche GB definiert. Solche Schätzungen können erfolgreich für die Referenzermittlung genutzt werden.

Insbesondere können durch die Erfindung die folgenden Vorteile realisiert werden:

- Die Schätzung verläuft nicht in Kurven- sondern in Geradeausfahrten und ist in breiterem Geschwindigkeitsbereich möglich. Der negative Einfluss von hochdynamischen Kurvenfahrten fällt aus.
- Die Schätzungsgenauigkeit ist nicht durch die niedrige Genauigkeit der IMU-Sensorik (z.B. Gierrate) beeinflusst (Offset- und Skalierungsfehler).
- Die Schätzung wird in unterschiedlichen Geschwindigkeitsbereichen separat durchgeführt. Dadurch ist sie stabiler und die Konvergenzzeit kürzer.
- Dank der hohen Schätzungsgenauigkeit kann der Ansatz für die Detektion des Reifendruckverlustes genutzt werden.

**Patentansprüche**

1. Verfahren zum Ermitteln wenigstens eines einen Umfang (U) eines Rads (10) eines Fahrzeugs charakterisierenden Umfangswerts, bei welchem:

   - eine Drehzahl des Rads (10) erfasst wird;
   - als erste Geschwindigkeit eine Radgeschwindigkeit (22) des Rads (10) in Abhängigkeit von der Drehzahl berechnet wird;
   - als zweite Geschwindigkeit eine Referenzgeschwindigkeit (24) des Fahrzeugs mittels eines Navigationssystems des Fahrzeugs satellitenbasiert ermittelt wird; und
   - der Umfangswert in Abhängigkeit von der Radgeschwindigkeit (22) und der Referenzgeschwindigkeit (24) ermittelt wird;

wobei wenigstens ein Dynamikwert ermittelt wird, welcher eine Dynamik zumindest einer der Geschwindigkeiten charakterisiert, wobei das Ermitteln des Umfangswerts in Abhängigkeit von dem Dynamikwert durchgeführt wird, **dadurch gekennzeichnet, dass**

mehrere, die zumindest eine Geschwindigkeit charakterisierende Geschwindigkeitswerte ermittelt werden, wobei für die Geschwindigkeitswerte, welche die zumindest eine Geschwindigkeit charakterisieren, eine Regressionsgerade (30) und anhand der Regressionsgeraden der Dynamikwert als ein Mittelwert der quadratischen Residuen ermittelt wird.

2. Verfahren nach Anspruch 1,
**dadurch gekennzeichnet, dass**
das Ermitteln des Umfangswerts in Abhängigkeit von dem Dynamikwert durchgeführt wird, wenn der Mittelwert größer als ein Schwellenwert ist.

3. Verfahren nach einem der vorhergehenden Ansprüche,
**dadurch gekennzeichnet, dass**
die Geschwindigkeitswerte in einem ersten Puffer, insbesondere in einem ersten Ringpuffer, gespeichert werden.

4. Verfahren nach einem der vorhergehenden Ansprüche,
**dadurch gekennzeichnet, dass**
mehrere, die andere Geschwindigkeit charakterisierende zweite Geschwindigkeitswerte ermittelt werden.

5. Verfahren nach den Ansprüchen 3 und 4,
**dadurch gekennzeichnet, dass**
die zweiten Geschwindigkeitswerte, welche die andere Geschwindigkeit charakterisieren, in einem zweiten Puffer, insbesondere in einem zweiten Ringpuffer, gespeichert werden.

6. Verfahren nach Anspruch 5,
**dadurch gekennzeichnet, dass**
wenigstens eine Verschiebung durchgeführt wird, bei welcher die gespeicherten ersten Geschwindigkeitswerte und die gespeicherten zweiten Geschwindigkeitswerte zyklisch gegeneinander um einen Zeitschritt verschoben werden, wobei in Abhängigkeit von der Verschiebung wenigstens ein Unterschied zwischen den Geschwindigkeiten und/oder zumindest ein Verhältnis der Geschwindigkeiten ermittelt wird, und wobei in Abhängigkeit von dem ermittelten Unterschied und/oder in Abhängigkeit von dem ermittelten Verhältnis der Umfangswert ermittelt wird.

7. Verfahren nach einem der Ansprüche 4 bis 6,
**dadurch gekennzeichnet, dass**
ein die ersten Geschwindigkeitswerte umfassendes und dadurch die zumindest eine Geschwindigkeit charakterisierendes erstes Signal (22) und ein die zweiten Geschwindigkeitswerte umfassendes und dadurch die andere Geschwindigkeit charakterisierendes zweites Signal (24) synchronisiert werden,

8. Kraftfahrzeug, welches zum Durchführen eines Verfahrens nach einem der vorhergehenden Ansprüche ausgebildet ist.

**Claims**

1. Method for determining at least one circumference value characterizing a circumference (U) of a wheel (10) of a vehicle, in which:

   - a rotational speed of the wheel (10) is detected;
   - as a first speed a wheel speed (22) of the wheel (10) is calculated as a function of the rotational speed;
   - as a second speed a reference speed (24) of the vehicle is determined in a satellite-based manner by means of a navigational system of the vehicle; and
   - the circumference value is determined as a function of the wheel speed (22) and the reference speed (24);
   wherein at least one dynamic value is determined which characterizes a dynamic of at least one of the speeds, wherein the determination of the circumference value is carried out as a function of the dynamic value,
   **characterised in that**
   several speed values characterizing the at least one speed are determined, wherein for the speed values which characterize the at least one speed, a regression line (30) is determined, and on the basis of the regression line the dynamic value is determined as an average of the quadratic residues.

2. Method according to claim 1,
**characterised in that**
the determination of the circumference value is carried out as a function of the dynamic value, if the average value is greater than a threshold value.

3. Method according to any one of the preceding claims,
**characterised in that**
the speed values are stored in a first buffer, in particular in a first ring buffer.

4. Method according to any one of the preceding claims,
**characterised in that**
several second speed values characterizing the other speed are determined.

5. Method according to claims 3 and 4,
**characterised in that**
the second speed values which characterize the other speed are stored in a second buffer, in particular in a second ring buffer.

6. Method according to claim 5,
**characterised in that**
at least one displacement is carried out, in which the stored first speed values and the stored second speed values are displaced cyclically against one another by a time step, wherein as a function of the displacement at least one difference between the speeds and/or at least one ratio of the speeds is determined, and wherein the circumference value is determined as a function of the determined difference and/or as a function of the determined ratio.

7. Method according to any one of claims 4 to 6,
**characterised in that**
a first signal (22) encompassing the first speed values and thus characterizing the at least one speed, and a second signal (24) encompassing the second speed values and thereby characterizing the other speed are synchronized.

8. Motor vehicle which is designed to carry out a method according to any one of the preceding claims.

**Revendications**

1. Procédé destiné à déterminer au moins une valeur de la circonférence caractérisant une circonférence (U) d'une roue (10) d'un véhicule, dans lequel :

   - une vitesse de rotation de la roue (10) est détectée ;
   - une vitesse de roue (22) de la roue (10) est calculée en tant que première vitesse en fonction de la vitesse de rotation ;
   - une vitesse de référence (24) du véhicule est déterminée par satellite en tant que seconde vitesse au moyen d'un système de navigation du véhicule ; et
   - la valeur de la circonférence est déterminée en fonction de la vitesse de roue (22) et de la vitesse de référence (24) ;
   dans lequel au moins une valeur de dynamique est déterminée, laquelle caractérise une dynamique d'au moins une des vitesses, dans lequel la détermination de la valeur de la circonférence est effectuée en fonction de la valeur de dynamique,
**caractérisé en ce que**
plusieurs valeurs de vitesse caractérisant la au moins une vitesse sont déterminées, dans lequel pour les valeurs de vitesse qui caractérisent la au moins une vitesse, une droite de régression (30) est déterminée et, à l'aide des droites de régression, la valeur de dynamique est déterminée en tant que valeur moyenne des résidus quadratiques.

2. Procédé selon la revendication 1,
**caractérisé en ce que**
la détermination de la valeur de la circonférence est effectuée en fonction de la valeur de dynamique lorsque la valeur moyenne est supérieure à une valeur seuil.

3. Procédé selon l'une quelconque des revendications précédentes,
**caractérisé en ce que**
les valeurs de vitesse sont enregistrées dans une première mémoire tampon, en particulier dans une première mémoire tampon circulaire.

4. Procédé selon l'une quelconque des revendications précédentes,
**caractérisé en ce que**
plusieurs secondes valeurs de vitesse caractérisant l'autre vitesse sont déterminées.

5. Procédé selon les revendications 3 et 4,
**caractérisé en ce que**
les secondes valeurs de vitesse qui caractérisent l'autre vitesse sont enregistrées dans une seconde mémoire tampon, en particulier dans une seconde mémoire tampon circulaire.

6. Procédé selon la revendication 5,
**caractérisé en ce que**
au moins un déplacement est effectué, lors duquel les premières données de vitesse enregistrées et les secondes données de vitesse enregistrées sont déplacées d'une unité temporelle les unes par rapport aux autres de manière cyclique, dans lequel en fonction du déplacement, au moins une différence entre les vitesses et/ou au moins un rapport des vitesses est déterminé(e), et dans lequel en fonction de la différence déterminée et/ou en fonction du rapport déterminé, la valeur de la circonférence est déterminée.

7. Procédé selon l'une quelconque des revendications 4 à 6,
**caractérisé en ce que**
un premier signal (22) comprenant les premières valeurs de vitesse et caractérisant de ce fait la au moins une vitesse et un second signal (24) comprenant les secondes valeurs de vitesse et caractérisant de ce fait l'autre vitesse sont synchronisés.

8. Véhicule à moteur qui est réalisé pour effectuer un procédé selon l'une quelconque des revendications précédentes.

Fig.1

Fig.2

Fig.3

Fig.4

20

30

18

Fig.5

20

30

18

Fig.6

Fig.7

Fig.8

Fig.9

Fig.10

Fig.11

Fig.12

GB

48

46

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006058567 A1

- DE 102012000213 A1

**In der Beschreibung aufgeführte Nicht-Patentliteratur**

- **SCHEIDE T. ; HECKER P.** *A map aided localization system for safety-relevant automotive assistance systems,* 2014

- **AUS OLSON E.** *A passive solution to the sensor synchronization problem,* 2010